# EUROPEAN PATENT SPECIFICATION

(11) **EP 1 845 147 B1**
(45) Date of publication and mention of the grant of the patent: **28.09.2011**
(21) Application number: 07005420.0
(22) Date of filing: 16.03.2007
(51) Int. Cl.: C09K 19/20, C09K 19/30, C09K 19/34

(54) **Liquid-crystalline compounds**
Flüssigkristalline Verbindungen
Composés liquides cristallins

(30) Priority: 13.04.2006 EP 06007778
(43) Date of publication of application: 17.10.2007
(73) Proprietor: Merck Patent GmbH, 64293 Darmstadt (DE)
(72) Inventor: Heckmeier, Michael Dr., 69502 Hemsbach (DE); Kirsch, Peer Dr., Yokohama Kanagawa 224-0033 (JP); Pauluth, Detlef Dr., 64372 Ober-Ramstadt (DE); Goulding, Mark John Dr., Ringwood Hampshire BH24 1SH (GB); Adlem, Kevin, Bournemouth BH8 9LS (GB); Duffy, Warren Dr., Southampton Hampshire SO15 5EF (GB); Saxton, Patricia Eileen, Halaterworth Rosmey Hampshire SO51 8PB (GB)

(56) References cited:
- EP-A- 0 609 566
- EP-A- 1 454 975
- EP-A- 1 900 792
- WO-A-01/46336
- WO-A-03/033619
- WO-A-2004/048501
- WO-A-2005/017067
- WO-A-2007/118623
- DE-A1- 4 006 921
- DE-A1- 10 243 776
- DE-A1- 19 946 228

## Description

The present invention relates to new compounds and the use thereof in a liquid-crystalline medium or for electro-optical purposes, and to displays containing this medium.

Liquid-crystals are used principally as dielectrics in display devices, since the optical properties of such substances can be modified by an applied voltage. Electro-optical devices based on liquid crystals are extremely well known to the person skilled in the art and can be based on various effects. Examples of such devices are cells having dynamic scattering, DAP (deformation of aligned phases) cells, guest/host cells, TN cells having a twisted nematic structure, STN (supertwisted nematic) cells, SBE (super-birefringence effect) cells and OMI (optical mode interference) cells. The commonest display devices are based on the Schadt-Helfrich effect and have a twisted nematic structure.

The liquid-crystal materials must have good chemical and thermal stability and good stability to electric fields and electromagnetic radiation. Furthermore, the liquid-crystal materials should have low viscosity and produce short addressing times, low threshold voltages and high contrast in the cells.

They should furthermore have a suitable mesophase, for example a nematic or cholesteric mesophase for the above-mentioned cells, at the usual operating temperatures, i.e. in the broadest possible range above and below room temperature. Since liquid crystals are generally used as mixtures of a plurality of components, it is important that the components are readily miscible with one another. Further properties, such as the electrical conductivity, the dielectric anisotropy and the optical anisotropy, have to satisfy various requirements depending on the cell type and area of application. For example, materials for cells having a twisted nematic structure should have positive dielectric anisotropy and low electrical conductivity.

For example, for matrix liquid-crystal displays with integrated non-linear elements for switching individual pixels (MLC displays), media having large positive dielectric anisotropy, broad nematic phases, relatively low birefringence, very high specific resistance, good UV and temperature stability and low vapour pressure are desired.

Matrix liquid-crystal displays of this type are known. Non-linear elements which can be used for individual switching of the individual pixels are, for example, active elements (i.e. transistors). The term "active matrix" is then used, where a distinction can be made between two types:
1. MOS (metal oxide semiconductor) or other diodes on a silicon wafer as substrate.
2. Thin-film transistors (TFTs) on a glass plate as substrate.

The use of single-crystal silicon as substrate material restricts the display size, since even modular assembly of various part-displays results in problems at the joins.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The TFT displays usually operate as TN cells with crossed polarisers in transmission and are illuminated from the back.

The term MLC displays here covers any matrix display with integrated non-linear elements, i.e., besides the active matrix, also displays with passive elements, such as varistors or diodes (MIM = metal-insulator-metal).

MLC displays of this type are particularly suitable for TV applications (for example pocket TVs) or for high-information displays for computer applications (laptops) and in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. With decreasing resistance, the contrast of an MLC display deteriorates, and the problem of after-image elimination may occur. Since the specific resistance of the liquid-crystal mixture generally drops over the life of an MLC display owing to interaction with the interior surfaces of the display, a high (initial) resistance is very important in order to obtain acceptable service lives. In particular in the case of low-volt mixtures, it was hitherto impossible to achieve very high specific resistance values. It is furthermore important that the specific resistance exhibits the smallest possible increase with increasing temperature and after heating and/or UV exposure. The low-temperature properties of the mixtures from the prior art are also particularly disadvantageous. It is demanded that no crystallisation and/or smectic phases occur, even at low temperatures, and the temperature dependence of the viscosity is as low as possible. The MLC displays from the prior art thus do not meet today's requirements.

There thus continues to be a great demand for MLC displays having very high specific resistance at the same time as a large working-temperature range, short response times even at low temperatures and low threshold voltage which do not have these disadvantages, or only do so to a reduced extent.

In TN (Schadt-Helfrich) cells, media are desired which facilitate the following advantages in the cells:
- extended nematic phase range (in particular down to low temperatures)
- the ability to switch at extremely low temperatures (outdoor use, automobile, avionics)
- increased resistance to UV radiation (longer service life).

The media available from the prior art do not allow these advantages to be achieved while simultaneously retaining the other parameters.

In the case of supertwisted (STN) cells, media are desired which enable greater multiplexability and/or lower threshold voltages and/or broader nematic phase ranges (in particular at low temperatures). To this end, a further widening of the available parameter latitude (clearing point, smectic-nematic transition or melting point, viscosity, dielectric parameters, elastic parameters) is urgently desired.

The present invention thus has the object of providing new compounds, in particular for MLC, TN or STN applications, which do not have the above-mentioned disadvantages or only do so to a reduced extent, and preferably simultaneously have high clearing points and low rotational viscosities (γ₁). In particular, it is possible to use the compounds of the formula I for the preparation of low Vₜₕ mixtures which have a very good γ₁/clearing point ratio and relatively low Δn values. The compounds and mixtures according to the invention are particularly suitable for low Δn applications. The mixtures according to the invention are preferably used in reflective and transflective applications.

In order to improve the stability/operating voltage window for TFT LC mixtures with a low threshold voltage (Vₜₕ), it is desirable to minimise or remove the ester content due to their inferior stability. However, removing ester materials increases both stability and Vₜₕ of the mixture. There is therefore a need to find improved materials with the polarity properties of esters but with the stability of materials having no ester bridge, like materials wherein rings are linked by a single bond. Replacement of the ester carbonyl function with a difluoromethyl group is one way to achieve both voltage and stability improvements in a LC mixture.

Although a considerable amount of prior art in the field of difluoromethylenoxy bridged LC materials already exists there are few references of relevance to this invention report. These are summarised below.

DE 40 06 921 discloses a general formula featuring compounds with a CF₂O-group, although the materials according to the invention are not explicitly named there.

WO 01/46336 A2 covers the use of CF₂O materials in combination with alkenyl materials in LC mixtures.

DE 199 46 228 A1 is a production process patent application for CF₂O liquid crystals which includes no specific materials like in this application.

EP 609 566 B1 refers to mixtures theoretically comprising CF₂O compounds according to a general formula, used in combination with a chiral dopant. Although the general formula covers many liquid crystals, compounds according to this invention are not disclosed there.

The documents EP 1 454 975 A2, WO 03/033619 A1,
WO 2004/048501 A1 and WO 2005/017067 A1 disclose compounds comprising a CF₂O bridging group and a terminal hydrogen as components of liquid crystal mixtures. In WO 03/033619 A1, though, the fluorination pattern is different, and in EP 1 454 975 A2,
WO 03/033619 A1 or WO 2005/017067 A1 cyclohexane or tetrahydropyran rings are included as partial structures. In the document DE 102 43 776 A1 such liquid crystalline compounds with a terminal hydrogen are included only accidentally.

The documents WO 2007/118623 A1 and EP 1 900 792 A1 seem to comprise compounds according to the invention, but are not to be considered as prior art

One object of this invention is to find new compounds suitable for liquid crystal mixtures. In order to substitute ester compounds or other known compounds having a CF₂O-group they should have comparable or better parameters, good stability and high reliability when used alone or in liquid crystal mixtures.

It has now been found that this object can be achieved if compounds according to the invention are used in liquid-crystalline media.

The present invention thus relates to compounds characterised by the general formula I 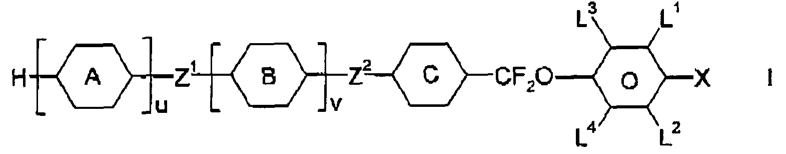 in which 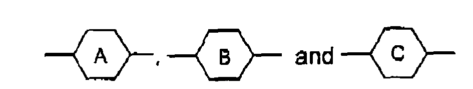 are each, independently of one another 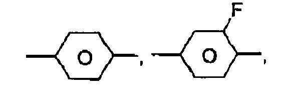 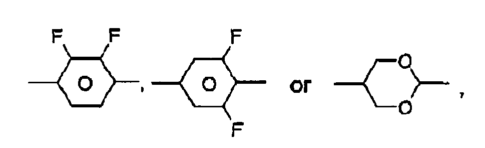
- L¹⁻⁴: are each, independently of one another, H or F,
- Z¹ and Z²: are each, independently of one another -CO-O-, -O-CO-, -C₂F₄-, -C₂H₄-, -CH=CH-, -CF=CF-, -CH=CF-, -CF=CH-, -CH₂O-, -OCH₂-, -C≡C-, or a single bond,
- X: is F, Cl, CN, OCN, NCS, SCN, SF₅, an unsubstituted alkyl or alkoxy radical, a halogenated alkyl radical, a halogenated alkenyl radical, a halogenated alkoxy radical or a halogena- ted alkenyloxy radical having up to 6 carbon atoms,
- u: is 0, 1, 2 or 3, and
- v: is 1 or 2, whereas u + v ≤ 3.

The compounds of the formula I have a broad range of applications. Depending on the choice of substituents, these compounds can serve as base materials of which liquid-crystalline media are predominantly composed; however, it is also possible to add compounds of the formula I to liquid-crystalline base materials from other classes of compound in order, for example, to modify the dielectric and/or optical anisotropy of a dielectric of this type and/or in order to optimise its threshold voltage and/or its viscosity.

The compounds of the formula I are colourless and form liquid-crystalline media in a temperature range which is favourably located for electro-optical use. They are stable chemically, thermally and to light. Having no further substituent in the terminal position, the compounds are especially easy to manufacture compared to prior art. The compounds are especially useful for liquid crystalline media having at the same time a low rotational viscosity and a high dielectric anisotropy.

Particularly preferred compounds of the formula I are selected from the group consisting of the following sub-formulae (L¹⁻⁸: H or F):

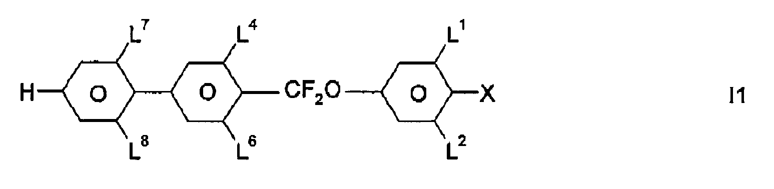

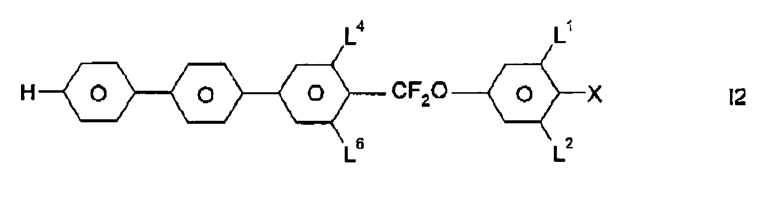

Among the formulae I1 to I2, compounds of formula I1 are preferred.

In the formula I and its subformulae, preferably at least one of L¹ and L² is F. Most preferably, both, L¹ and L² are F.

The compounds of the formula I are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants which are known per se, but are not mentloned here In greater detail.

The compounds of the formula I are preferably prepared as follows (Scheme 1 and 2):

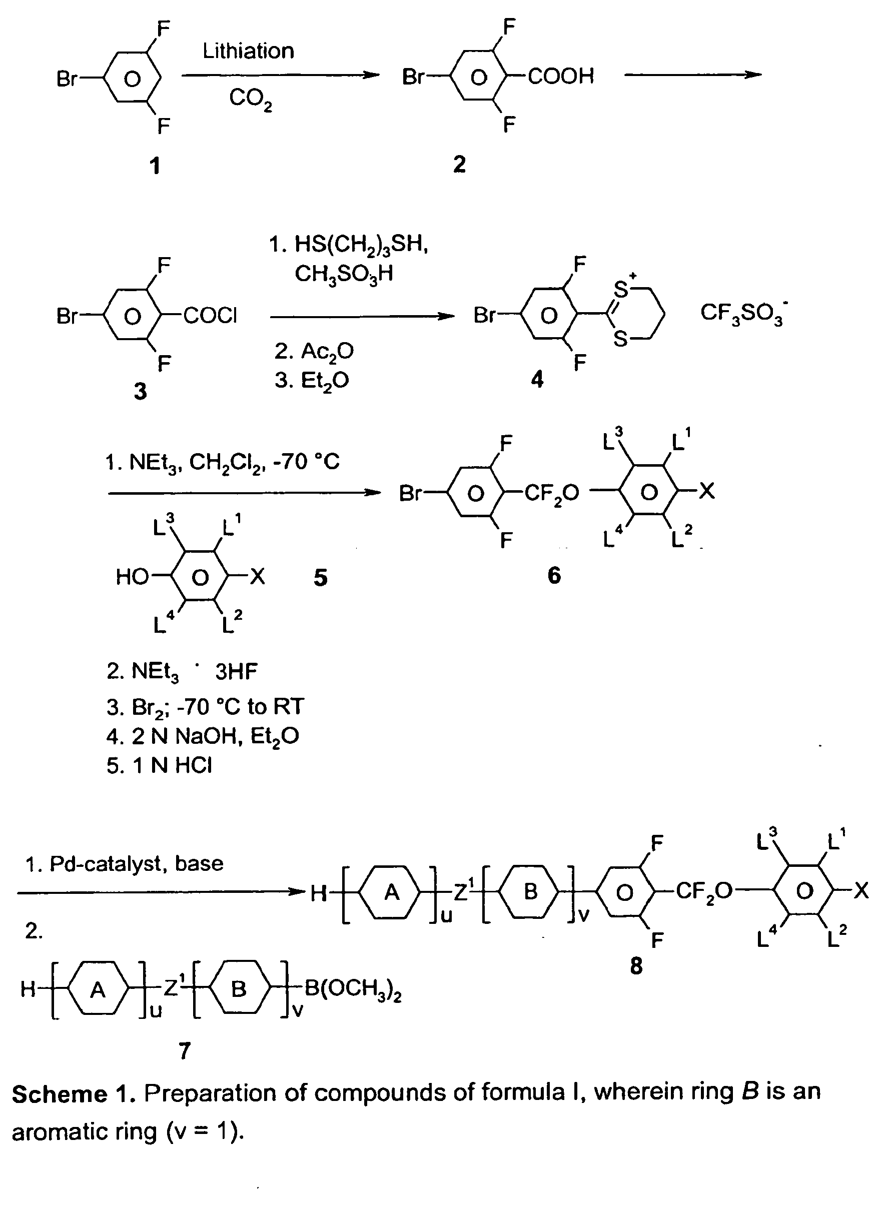

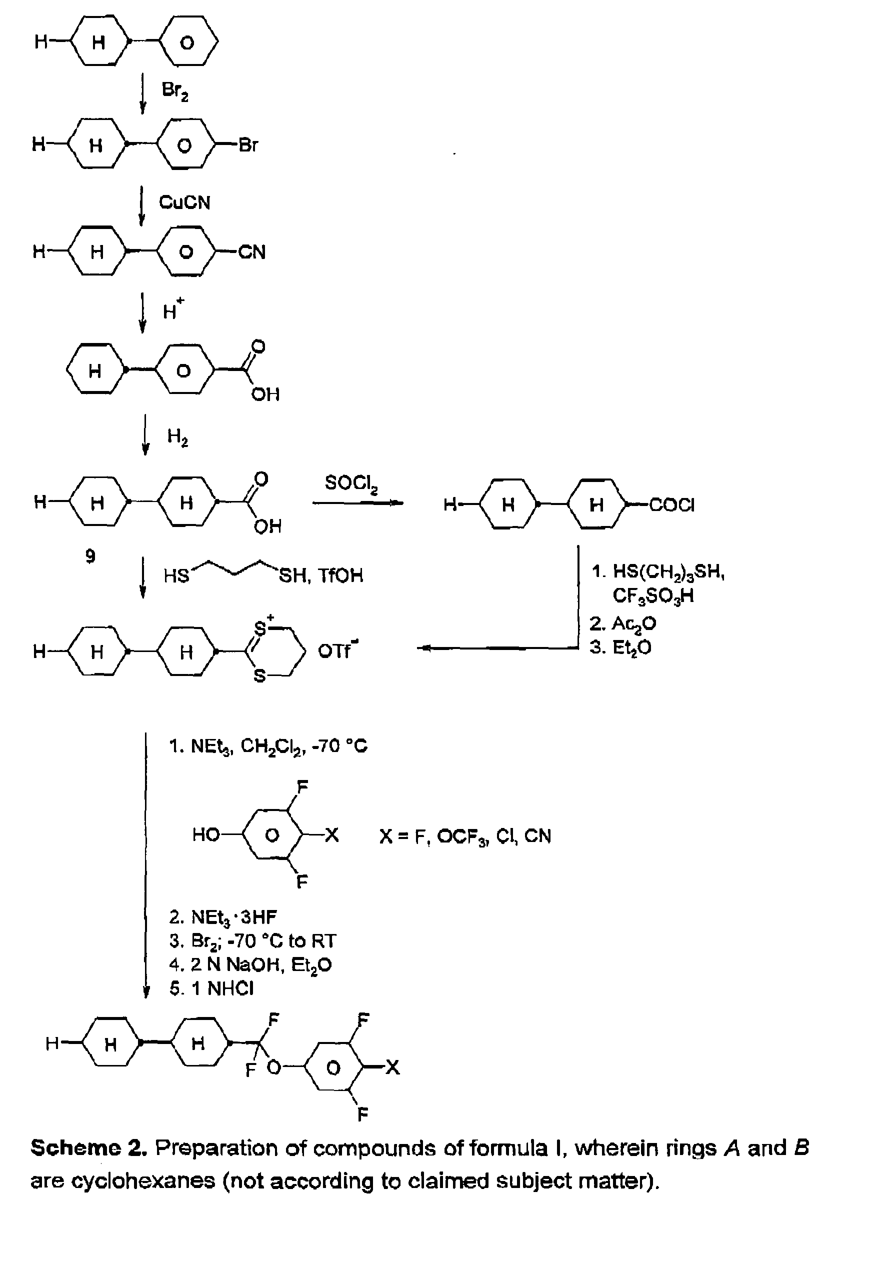

The reaction sequence in Scheme 1 is self-explaining. Other starting materials can be use in order to obtain compounds similar to formula **8**. For example other p-bromobenzoic acid deriates according to starting material of formula **2** can be used. In this manner the second ring from the right in formula **8** according to ring C in formula I can be varied. The starting material of formula **5** can also have various substituents L¹ to L⁴ in order to achieve variations in the product of formula **8**.

The synthesis exemplified in Scheme 2 is also self-explaining. The transformations of Scheme 1 and 2 are known in the art. The compound of formula **9** can be transformed into the bis(alkylthio)carbenium salt by several known methods. Variation of the bicyclohexyl group in structure **9** will lead to a whole variety of compounds according to the invention. Other carboxylic acids with varying substituents like in the general formula 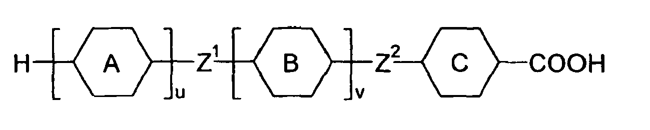 wherein rings A/B, Z^{1/2} are defined as in formula I,
are known or can be prepared by commonly known procedures.

Alternative routes to compounds according to the invention are explained in the schemes 3 and 4 below, which encompass reactions known from prior art. 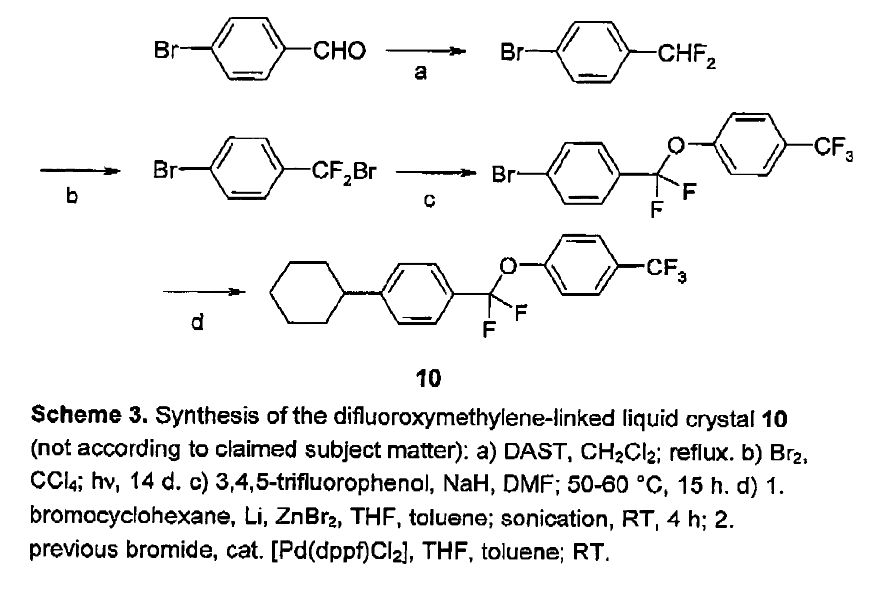 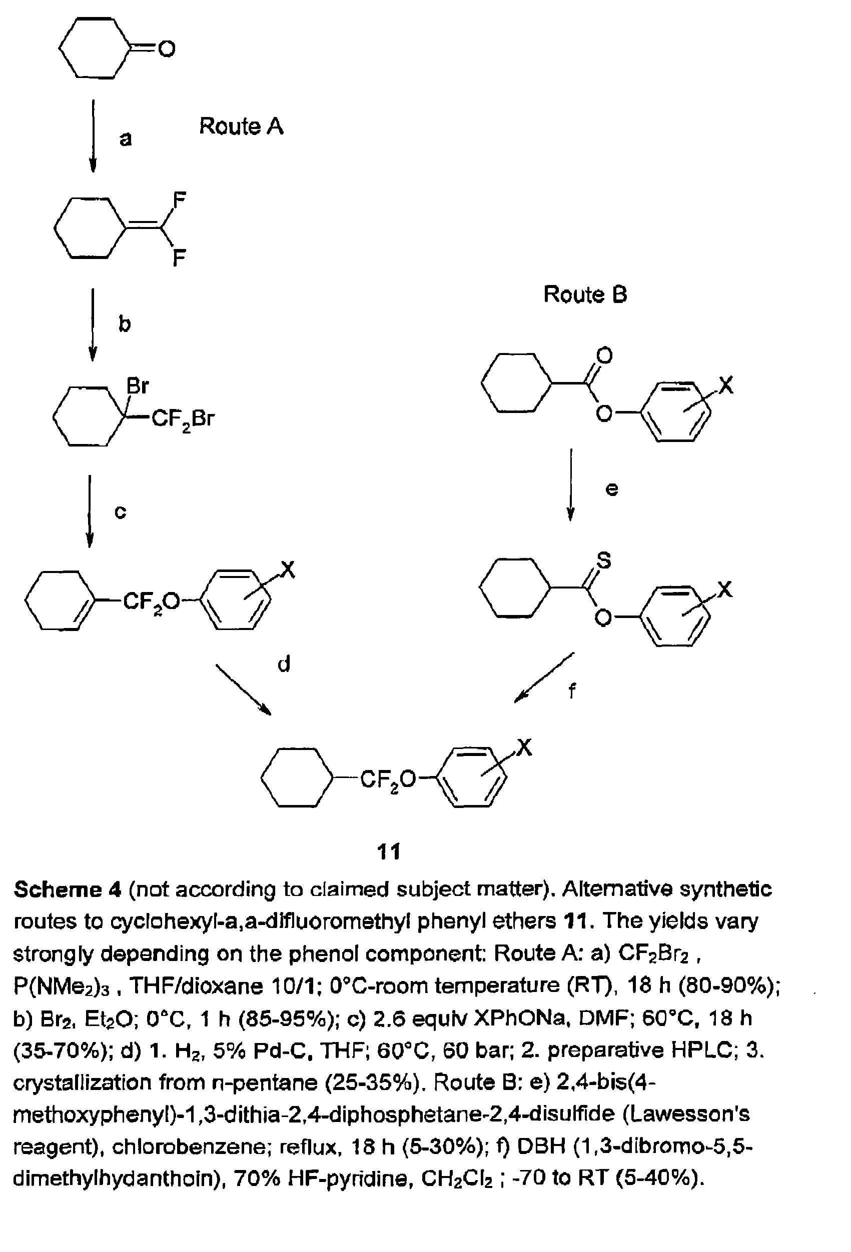 The invention also relates to liquid crystalline media, to electro-optical displays (in particular STN or MLC displays having two plane-parallel outer plates, which, together with a frame, form a cell, integrated non-linear elements for switching individual pixels on the outer plates, and a nematic liquid-crystal mixture of positive dielectric anisotropy and high specific resistance which is located in the cell) which contain media of this type, and to the use of these media for electro-optical purposes. Besides for reflective displays, the mixtures according to the invention are also suitable for IPS (in plane switching) applications, OCB (optically controlled birefringence) applications and VA (vertical alignment) applications.

The media according to the invention are preferably based on a plurality of (preferably two or more) compounds of the formula I, i.e. the proportion of these compounds is 0.5-95 %, preferably 1-60 % and particularly preferably in the range 1-40 %.
Preferred embodiments are indicated below:
- The medium comprises one or more compounds of the formulae I1-a to I2-d: 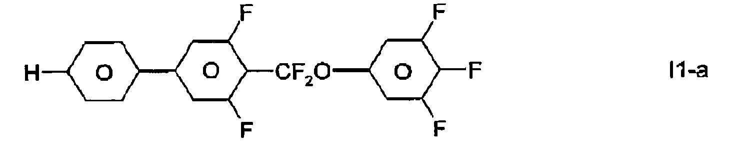 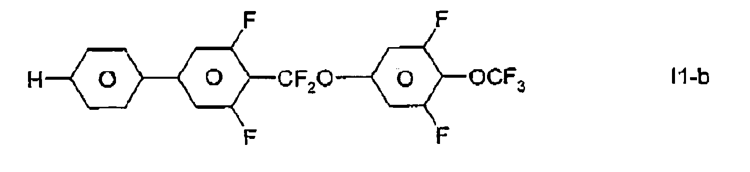 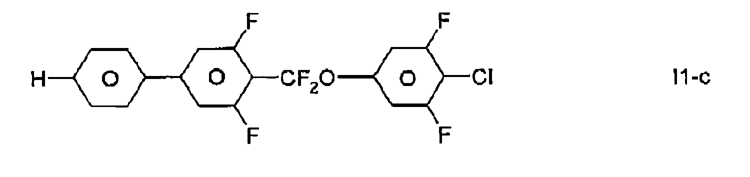 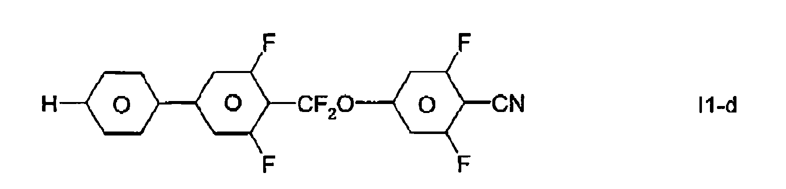 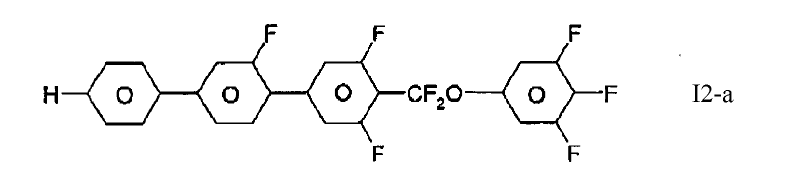 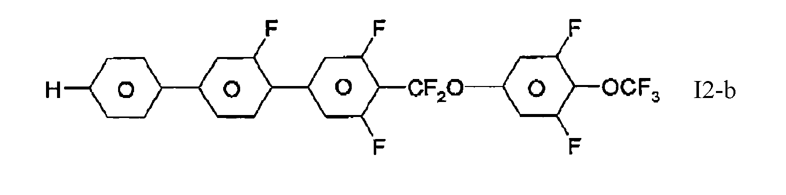 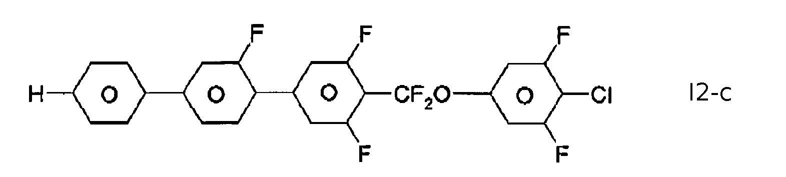 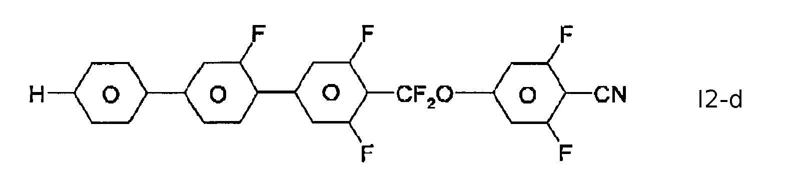
- X is preferably F, Cl, CN, OCN, NCS, SCN, SF₅, OCH₃, CH₃, OC₂H₅, C₂H₅, OC₃H₇, C₃H₇, CF₃, C₂F₅, C₃F₇, CF₂H, OCF₃, OCF₂H, OCFHCF₃, OCFHCH₂F, OCFHCHF₂, OCF₂CH₃, OCF₂CH₂F, OCF₂CHF₂, OCF₂CF₂CF₂H, OCF₂CF₂CH₂F, OCFHCF₂CF₃, OCFHCF₂CHF₂, OCFHCFHCF₃, OCH₂CF₂CF₃, OCF₂CF₂CF₃, OCF₂CFHCHF₂, OCF₂CH₂CHF₂, OCFHCF₂CHF₂, OCFHCFHCHF₂, OCFHCH₂CF₃, OCH₂CFHCF₃, OCH₂CF₂CHF₂, OCF₂CFHCH₃, OCF₂CH₂CHF₂, OCFHCF₂CH₃, OCFHCFHCHF₂, OCFHCH₂CF₃, OCH₂CF₂CHF₂, OCH₂CFHCHF₂, OCF₂CH₂CH₃, OCFHCFHCH₃, OCFHCH₂CHF₂, OCH₂CF₂CH₃, OCH₂CFHCHF₂, OCH₂CH₂CHF₂, OCHFCH₂CH₃, OCH₂CFHCH₃, OCH₂CH₂CHF₂, OCClFCF₃, OCClFCClF₂, OCClFCHF₂, OCFHCCl₂F, OCClFCHF₂, OCClFCClF₂, OCF₂CHCl₂, OCF₂CHCl₂, OCF₂CCl₂F, OCF₂CClFH, OCF₂CClF₂, OCF₂CF₂CClF₂, OCF₂CF₂CCl₂F, OCClFCF₂CF₃, OCClFCF₂CHF₂, OCClFCF₂CClF₂, OCClFCFHCF₃, OCClFCClFCF₃, OCCl₂CF₂CF₃, OCClHCF₂CF₃, OCClFCF₂CF₃, OCClFCClFCF₃, OCF₂CClFCHF₂, OCF₂CF₂CCl₂F, OCF₂CCl₂CHF₂, OCF₂CH₂CClF₂, OCClFCF₂CFH₂, OCFHCF₂CCl₂F, OCClFCFHCHF₂, OCClFCClFCF₂H, OCFHCFHCClF₂, OCClFCH₂CF₃, OCFHCCl₂CF₃, OCCl₂CFHCF₃, OCH₂CClFCF₃, OCCl₂CF₂CF₂H, OCH₂CF₂CClF₂, OCF₂CClFCH₃, OCF₂CFHCCl₂H, OCF₂CCl₂CFH₂, OCF₂CH₂CCl₂F, OCClFCF₂CH₃, OCFHCF₂CCl₂H, OCClFCClFCHF₂, OCFHCFHCCl₂F, OCClFCH₂ClF₃, OCFHCCl₂CF₃, OCCl₂CF₂CFH₂, OCH₂CF₂CCl₂F, OCCl₂CFHCF₂H, OCClHCClFCF₂H, OCF₂CClHCClH₂, OCF₂CH₂CCl₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CClFCFCl₂, OCH₂CH₂CF₂H, OCClHCClHCF₂H, OCH₂CCl₂CF₂H, OCClFCH₂CH₃, OCFHCH₂CCl₂H, OCClHCFHCClH₂, OCH₂CFHCCl₂H, OCCl₂CH₂CF₂H, OCH₂CCl₂CF₂H, CH=CF₂, OCH=CF₂, CF=CF₂, OCF=CF₂, CF=CHF, OCF=CHF, CH=CHF, OCH=CHF, CF₂CH₂CF₃ or CF₂CHFCF₃ in particular F, Cl, CN, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, CH=CF₂, OCH₃, OC₂H₅ or OC₃H₇
- The proportion of compounds of the formula I in a liquid-crystalline medium as a whole is from 1 to 40 % by weight, preferably from 1 to 30 % by weight and particularly preferably from 1 to 25 % by weight; For the applications described above the liquid-crystalline media preferably contain at least one compound of formula I, and a nematic host mixture comprising one or more nematic or nematogenic compounds.

Preferably the liquid-crystalline medium consists of 2 to 25, preferably 3 to 15 compounds, at least one of which is a compound of formula I. The other compounds, forming the nematic host mixture, are preferably low molecular weight liquid crystal compounds selected from nematic or nematogenic substances, for example from the known classes of the azoxybenzenes, benzylidene-anilines, biphenyls, terphenyls, phenyl or cyclohexyl benzoates, phenyl or cyclohexyl esters of cyclohexanecarboxylic acid, phenyl or cyclohexyl esters of cyclohexylbenzoid acid, phenyl or cyclohexyl esters of cyclohexylcyclohexanecarboxylic acid, cyclohexylphenyl esters of benzoic acid, of cyclohexanecarboxylic acid and of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexylpyridazines, phenyl- or cyclohexyldioxanes, phenyl- or cyclohexyl-1,3-dithianes, 1,2-diphenyl-ethanes, 1,2-dicyclohexylethanes, 1-phenyl-2-cyclohexylethanes, 1-cyclohexyl-2-(4-phenylcyclohexyl)-ethanes, 1-cyclohexyl-2-biphenyl-ethanes, 1-phenyl-2-cyclohexylphenylethanes, optionally halogenated stilbenes, benzyl phenyl ether, tolanes, substituted cinnamic acids and further classes of nematic or nematogenic substances. The 1,4-phenylene groups in these compounds may also be laterally mono- or difluorinated.

The most important compounds that are possible as components of these LC mixtures can be characterized by the following formula

R'-L'-G'-E-R"

wherein L' and E, which may be identical or different, are in each case, independently from one another, a bivalent radical from the group formed by -Phe-, -Cyc-, -Phe-Phe-, -Phe-Cyc-, -Cyc-Cyc-, -Pyr-, -Dio-, -B-Phe- and -B-Cyc- and their mirror images, where Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl and B is 2-(trans-1,4-cyclohexyl)ethyl, pyrimidine-2,5-diyl and Dio is 1,3-dioxane-2,5-diyl.

G' in these compounds is selected from the following bivalent groups -CH=CH-, -N(O)N-, -CH=CY-, -CH=N(O)-, -C≡C-, -CH₂-CH₂-, -CO-O-, -CH₂-O-, -CO-S-, -CH₂-S-, -CF₂O-, -OCF₂-, -CH=N-, -COO-Phe-COO- or a single bond, with Y being halogen, preferably chlorine, or -CN.

R' and R" are, in each case, independently of one another, alkyl, alkenyl, alkoxy, alkenyloxy, alkanoyloxy, alkoxycarbonyl or alkoxycarbonyloxy with 1 to 18, preferably 3 to 12 C atoms, or alternatively one of R' and R" is F, SF₅, CF₃, OCF₃, Cl, NCS or CN.

In most of these compounds R' and R" are, in each case, independently of each another, alkyl, alkenyl or alkoxy with different chain length, wherein the sum of C atoms in nematic media generally is between 2 and 9, preferably between 2 and 7.

Many of these compounds or mixtures thereof are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known per se, but are not mentioned here.

The construction of the MLC display according to the invention from polarisers, electrode base plates and surface-treated electrodes corresponds to the conventional construction for displays of this type. The term "conventional construction" is broadly drawn here and also covers all derivatives and modifications of the MLC display, in particular including matrix display elements based on poly-Si TFT or MIM.

A significant difference between the displays according to the invention and the conventional displays based on the twisted nematic cell consists, however, in the choice of the liquid-crystal parameters of the liquid-crystal layer.

The liquid-crystal mixtures which can be used in accordance with the invention are prepared in a manner conventional per se. In general, the desired amount of the components used in the lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

Thus, a further embodiment of the invention is a method of preparing a liquid crystalline medium by joining at least one compound of formula I with other liquid crystalline compounds and mixing them while optionally adding further additives.

The dielectrics may also comprise further additives known to the person skilled in the art and described in the literature. For example, 0-15 % of pleochroic dyes, stabilizers, nanoparticles, or chiral dopants can be added.

The following examples are intended to explain the invention without restricting it. Above and below, percentages are per cent by weight. All temperatures are given in degrees Celsius. m.p. denotes melting point, cl.p. = clearing point. Furthermore, C = crystalline state, N = nematic phase, S = smectic phase and I = isotropic phase. The data between these symbols represent the transition temperatures. Δn denotes optical anisotropy (589 nm, 20°C). The flow viscosity ν₂₀ (mm²/sec) and the rotational viscosity γ₁ [mPa·s] were each determined at 20°C. Δε denotes the dielectric anisotropy (Δε = ε_{∥} - ε_{⊥}, where ε_{∥} denotes the dielectric constant parallel to the longitudinal molecular axes and ε_{⊥} denotes the dielectric constant perpendicular thereto). The electro-optical data were measured in a TN cell at the 1 st minimum (i.e. at a d · Δn value of 0.5 µm) at 20°C, unless expressly stated otherwise. The optical data were measured at 20°C, unless expressly stated otherwise.

The values for Δε and Δn of the compounds are measured by linear extrapolation from a liquid-crystalline mixture containing 10 % by weight of the compound and 90 % of a commercially available liquid-crystal mixture ZLI-4792 (Merck KGaA, Darmstadt).

In the examples, "conventional work-up" means that water is added if necessary, the mixture is extracted with dichloromethane, diethyl ether, methyl tert-butyl ether or toluene, the phases are separated, the organic phase is dried and evaporated, and the product is purified by distillation under reduced pressure or crystallisation and/or chromatography. The following abbreviations are used:
- n-BuLi: 1.6 molar solution of n-butyllithium in n-hexane
- THF: tetrahydrofuran
- DAST: diethylaminosulfur trifluoride
- RT: room temperature

### Example 1

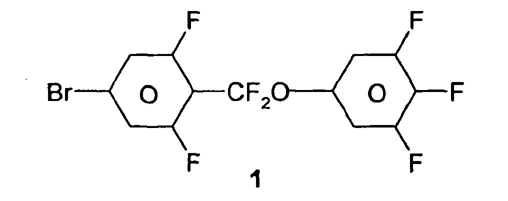

The p-bromo compound 1 is prepared in analogy to methods described in P. Kirsch et al. Angew. Chem. Int. Ed. 2001, 40, No. 8, 1480-1484 (see also Scheme 1).

General procedure for coupling of bromobenzenes with boronic acids:

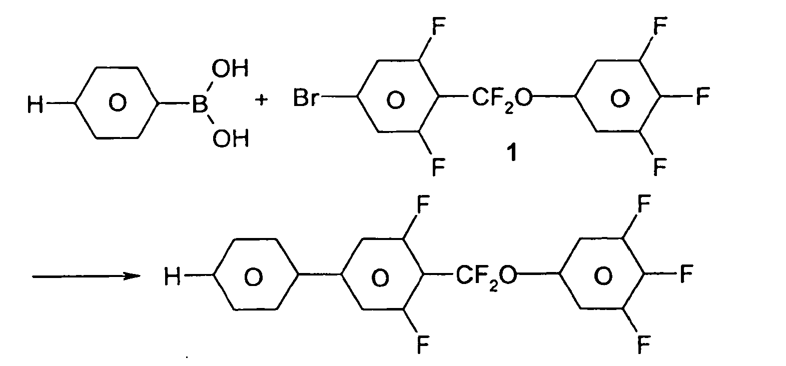

To a solution of sodium metaborate octahydrate (12.5 g, 45.0 mmol) in water (72 ml) are added bis(triphenylphosphin)palladium-(II) chloride (0.90 g, 1.26 mmol), hydrazinium hydroxide (0.06 ml, 1.23 mmol), the bromide 1 (23.5 g, 60.0 mmol), and tetrahydrofuran (THF, 18 ml). The mixture is stirred for 5 min and the benzene boronic acid (7.30 g, 60.0 mmol) - or any of the derivatives of benzene boronic acid - dissolved in THF (30 ml) is added. The mixture is stirred and maintained at boiling temperature for 12 h or until most of the starting materials are consumed according to thin layer chromatography. After cooling water and methyl t-butyl ether are added and the phases are separated. Upon further extraction with ether the combined organic phases are washed with water and brine, dried over sodium sulphate and evaporated to dryness. The residue is taken up in petroleum ethers and is filtered through a pad of silica. The product is crystallized from ethanol and hexane.
(m.p. 75 °C).
C 75 l;
Δn = 0.090;
Δε = 19.

The compounds of the formula 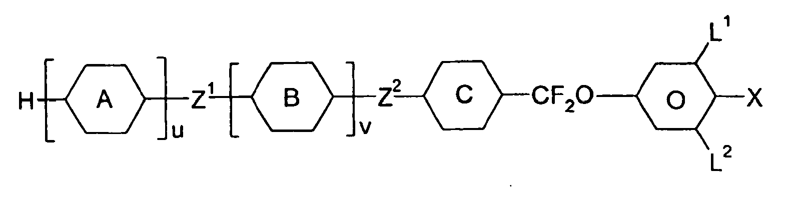 are prepared analogously to the general procedure or in accordance with Schemes 1-4 (cyclohexane derivatives, no. 17-46), wherein the partial structures are defined according to the following table:

**Table 1. Compounds with physical data:**

| No. | 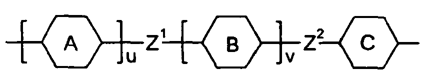 | X | L¹ | L² | values |
|---|---|---|---|---|---|
| 2 | 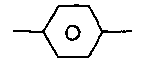 | F | H | H | |
| 3 | 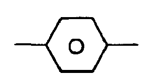 | F | F | H | |
| 4 | 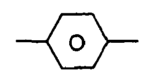 | F | F | F | |
| 5 | 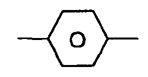 | Cl | H | H | |
| 6 | 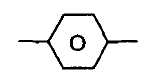 | Cl | F | H | |
| 7 | 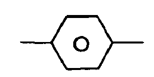 | Cl | F | F | |
| 8 | 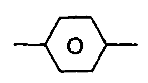 | OCF₃ | H | H | |
| 9 | 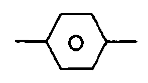 | OCF₃ | F | H | |
| 10 | 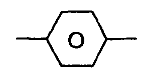 | OCF₃ | F | F | |
| 11 | 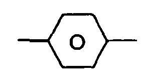 | CN | H | H | |
| 12 | 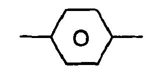 | CN | F | H | |
| 13 | 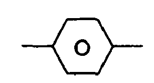 | CN | F | F | |
| 14 | 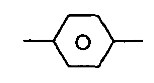 | SF₅ | H | H | |
| 15 | 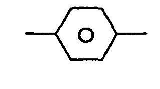 | SF₅ | F | H | |
| 16 | 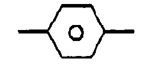 | SF₅ | F | F | |
| 17 | 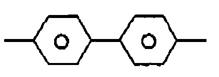 | F | H | H | |
| 18 | 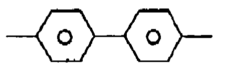 | F | F | H | |
| 19 | 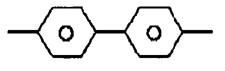 | F | F | F | |
| 20 | 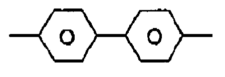 | Cl | H | H | |
| 21 | 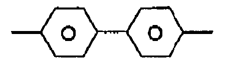 | Cl | F | H | |
| 22 | 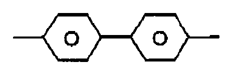 | Cl | F | F | |
| 23 | 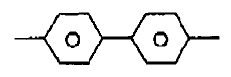 | OCF₃ | H | H | |
| 24 | 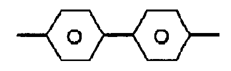 | OCF₃ | F | H | |
| 25 | 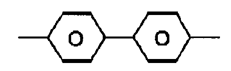 | OCF₃ | F | F | |
| 26 | 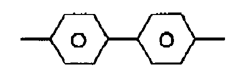 | CN | H | H | |
| 27 | 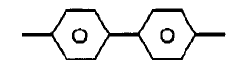 | CN | F | H | |
| 28 | 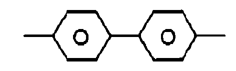 | CN | F | F | |
| 29 | 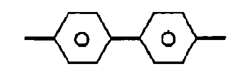 | SF₅ | H | H | |
| 30 | 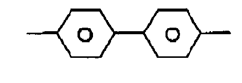 | SF₅ | F | H | |
| 31 | 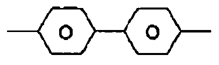 | SF₅ | F | F | |
| 32 | 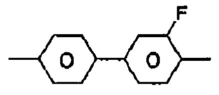 | F | H | H | |
| 33 | 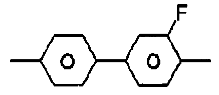 | F | F | H | |
| 35 | 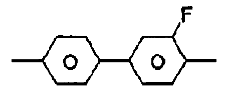 | Cl | H | H | |
| 36 | 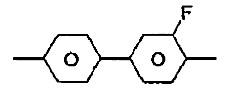 | Cl | F | H | |
| 37 | 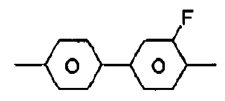 | Cl | F | F | |
| 38 | 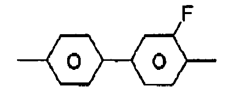 | OCF₃ | H | H | |
| 39 | 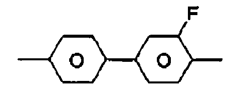 | OCF₃ | F | H | |
| 40 | 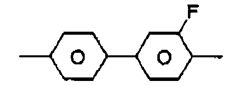 | OCF₃ | F | F | |
| 41 | 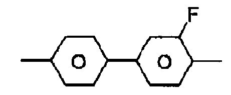 | CN | H | H | |
| 42 | 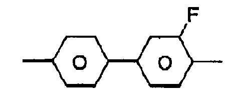 | CN | F | H | |
| 43 | 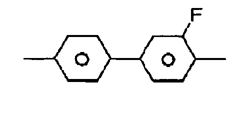 | CN | F | F | |
| 44 | 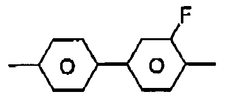 | SF₅ | H | H | |
| 45 | 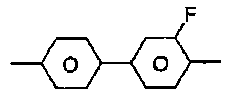 | SF₅ | F | H | |
| 47 | 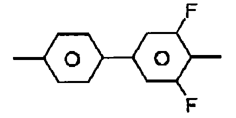 | F | H | H | |
| 48 | 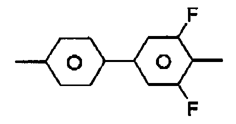 | F | F | H | |
| 49 | 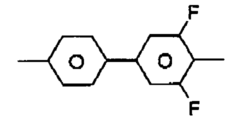 | Cl | H | H | |
| 50 | 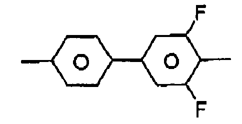 | Cl | F | H | C 74 l; Δn = 0.119; Δε = 18 |
| 51 | 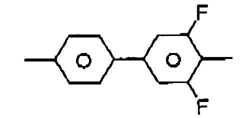 | Cl | F | F | |
| 52 | 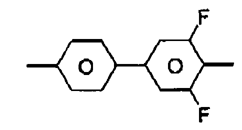 | OCF₃ | H | H | |
| 53 | 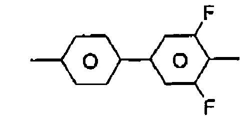 | OCF₃ | F | H | |
| 54 | 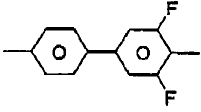 | OCF₃ | F | F | C 63 l; Δn = 0.101; Δε = 22 |
| 55 | 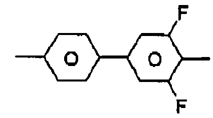 | CN | H | H | |
| 56 | 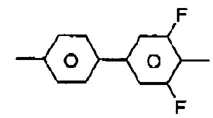 | CN | F | H | C 125 l; Δn = 0.20; Δε = 40 |
| 57 | 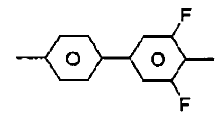 | CN | F | F | |
| 58 | 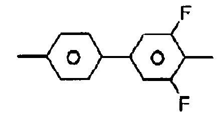 | SF₅ | H | H | |
| 59 | 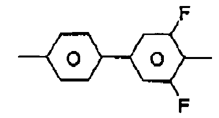 | SF₅ | F | H | |
| 60 | 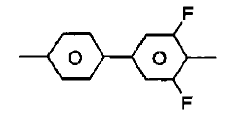 | SF₅ | F | F | |
| 61 | 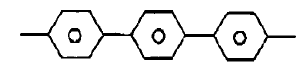 | F | H | H | |
| 62 | 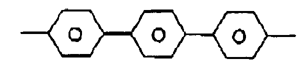 | F | F | H | |
| 63 | 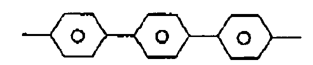 | F | F | F | |
| 64 | 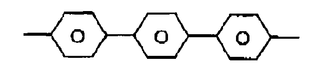 | Cl | H | H | |
| 65 | 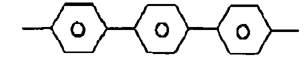 | Cl | F | H | |
| 66 | 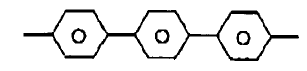 | Cl | F | F | |
| 67 | 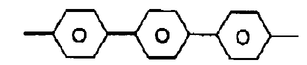 | OCF₃ | H | H | |
| 68 | 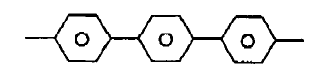 | OCF₃ | F | H | |
| 69 | 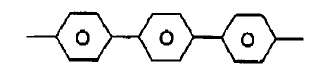 | OCF₃ | F | F | |
| 70 | 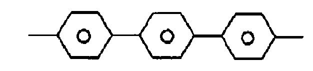 | CN | H | H | |
| 71 | 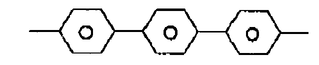 | CN | F | H | |
| 72 | 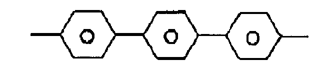 | CN | F | F | |
| 73 | 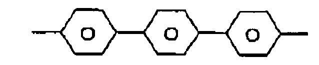 | SF₅ | H | H | |
| 74 | 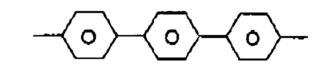 | SF₅ | F | H | |
| 75 | 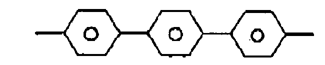 | SF₅ | F | F | |
| 76 | 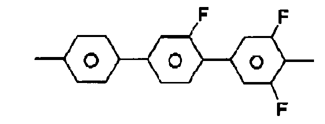 | F | H | H | |
| 77 | 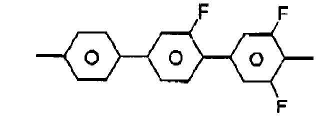 | F | F | H | |
| 78 | 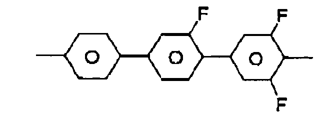 | F | F | F | |
| 79 | 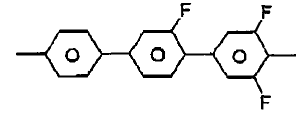 | Cl | H | H | |
| 80 | 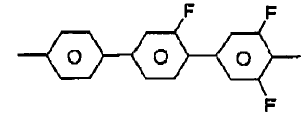 | Cl | F | H | |
| 81 | 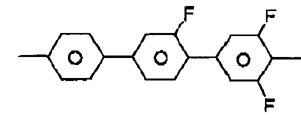 | Cl | F | F | |
| 82 | 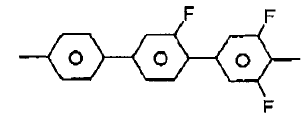 | OCF₃ | H | H | |
| 83 | 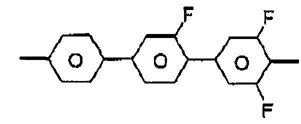 | OCF₃ | F | H | |
| 84 | 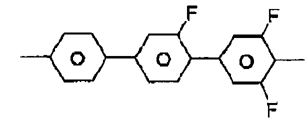 | OCF₃ | F | F | |
| 85 | 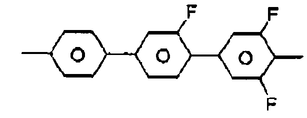 | CN | H | H | |
| 86 | 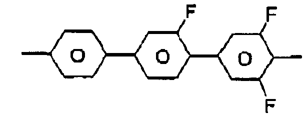 | CN | F | H | |
| 87 | 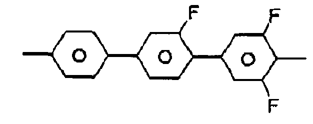 | CN | F | F | |
| 88 | 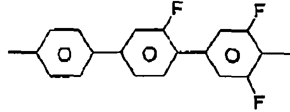 | SF₅ | H | H | |
| 89 | 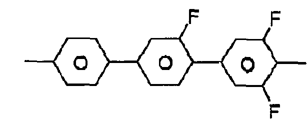 | SF₅ | F | H | |
| 90 | 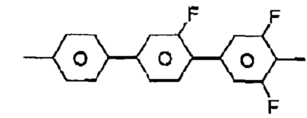 | SF₅ | F | F | |
| 91 | 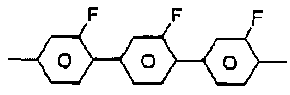 | F | H | H | |
| 92 | 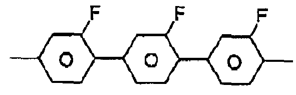 | F | F | H | |
| 93 | 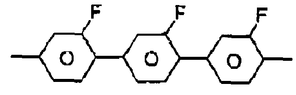 | F | F | F | |
| 94 | 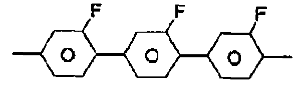 | Cl | H | H | |
| 95 | 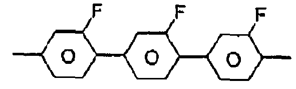 | Cl | F | H | |
| 96 | 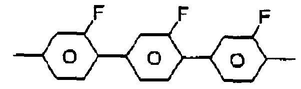 | Cl | F | F | |
| 97 | 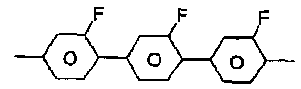 | OCF₃ | H | H | |
| 98 | 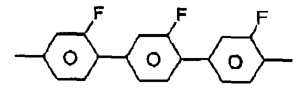 | OCF₃ | F | H | |
| 99 | 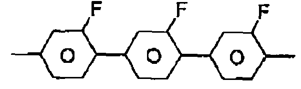 | OCF₃ | F | F | |
| 100 | 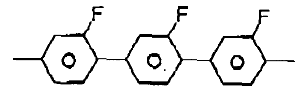 | CN | H | H | |
| 101 | 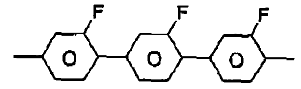 | CN | F | H | |
| 102 | 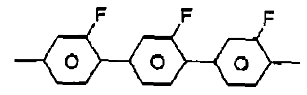 | CN | F | F | |
| 103 | 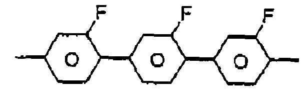 | SF₅ | H | H | |
| 104 | 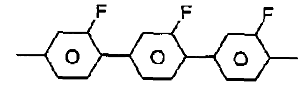 | SF₅ | F | H | |
| 105 | 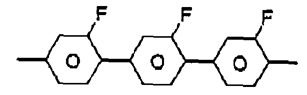 | SF₅ | F | F | |
| 106 | 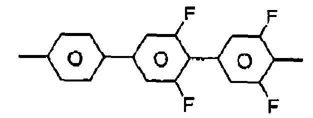 | F | H | H | |
| 107 | 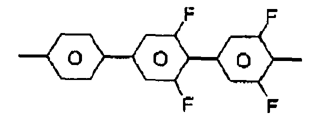 | F | F | H | |
| 108 | 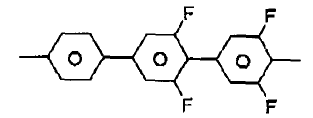 | F | F | F | |
| 109 | 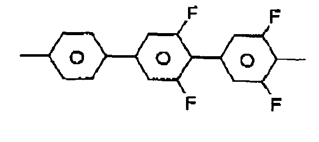 | Cl | H | H | |
| 110 | 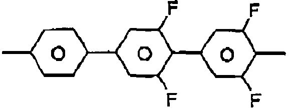 | Cl | F | H | |
| 111 | 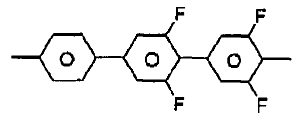 | Cl | F | F | |
| 112 | 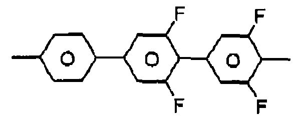 | OCF₃ | H | H | |
| 113 | 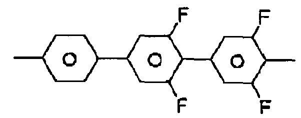 | OCF₃ | F | H | |
| 114 | 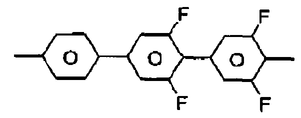 | OCF₃ | F | F | |
| 115 | 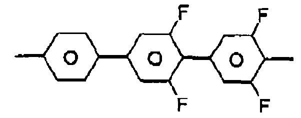 | CN | H | H | |
| 116 | 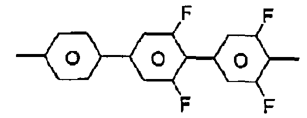 | CN | F | H | |
| 117 | 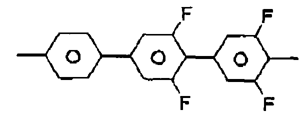 | CN | F | F | |
| 118 | 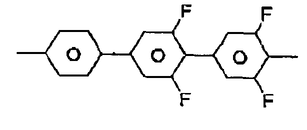 | SF₅ | H | H | |
| 119 | 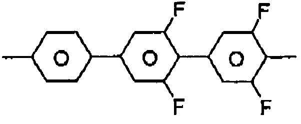 | SF₅ | F | H | |
| 120 | 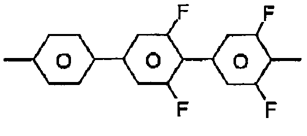 | SF₅ | F | F | |

## Claims

1. Compounds of the formula I, 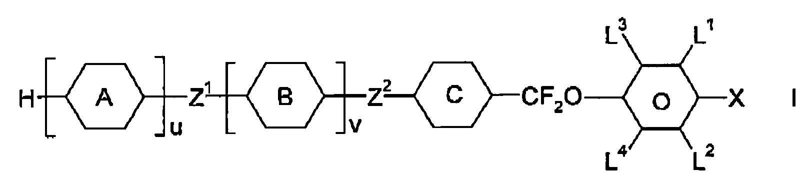 in which 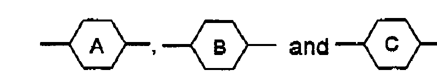 are each, independently of one another 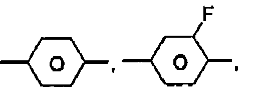 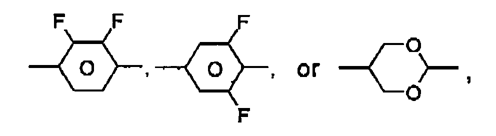
L¹⁻⁴ are each, independently of one another, H or F,
Z¹ and Z² are each, independently of one another -CO-O-, -O-CO-, -C₂F₄-, -C₂H₄-, -CH=CH-, -CF=CF-, -CH=CF-, -CF=CH-, -CH₂O-, -OCH₂-, -C≡C-, or a single bond,
X is F, Cl, CN, OCN, NCS, SCN, SF₅, an unsubstituted alkyl or alkoxy radical, a halogenated alkyl radical, a halogenated alkenyl radical, a halogenated alkoxy radical or a halogenated alkenyloxy radical having up to 6 carbon atoms, and
u 0, 1, 2 or 3, and
v is 1 or 2, whereas u + v ≤ 3.

2. Compounds according to claim 1, wherein at least one of Z¹ and Z² are single bonds.

3. Compounds according to claim or of the formulae I1, I2 and I2-a to I2-d 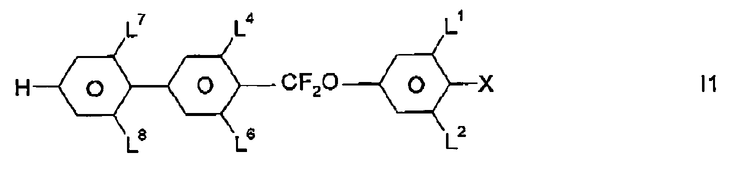 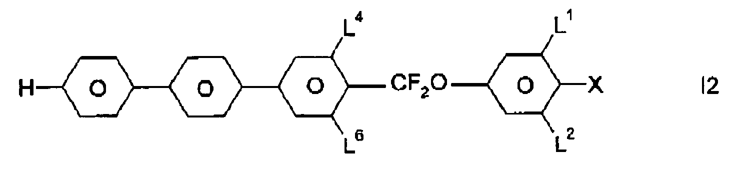 wherein L^{1-a} is H or F,

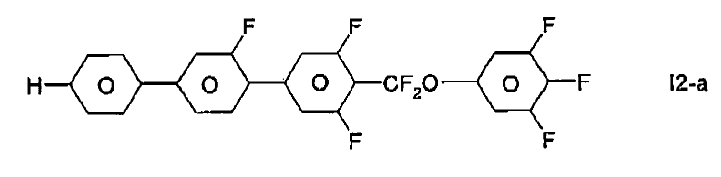

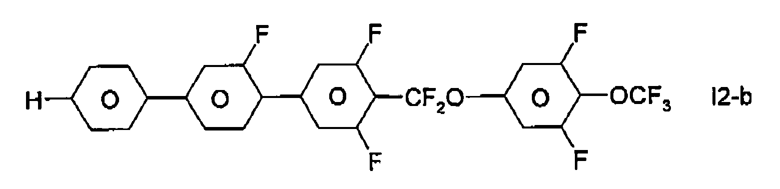

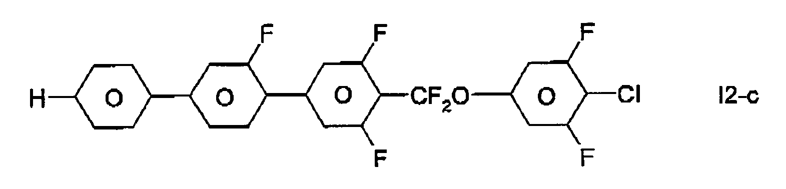

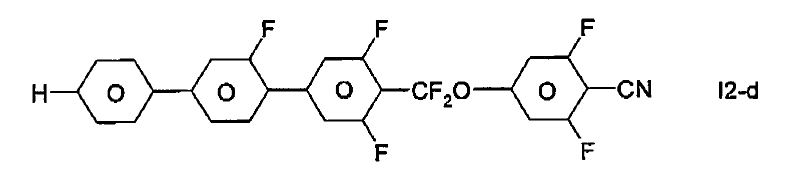

4. Compounds according to at least one of claims 1 to 3, wherein X is F, Cl, CN, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, CH=CF₂, OCH₃, OC₂H₅ or OC₃H₇

5. Compounds according to at least one of claims 1 to 4, wherein L¹ = L²= F and L³= L⁴= H.

6. Compounds according to at least one of claims 1 to 4 wherein ring C is

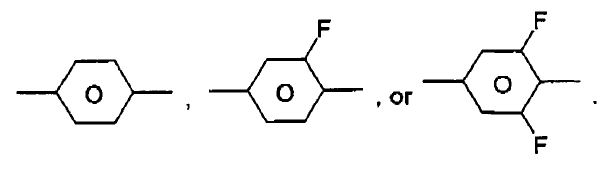

7. Compounds according to at least one of claims 1 to 4, wherein Z¹ and Z² are both single bonds.

8. Use of the compounds according to at least one of claims 1 to 7 for electro-optical purposes.

9. A liquid-crystalline medium consisting of at least two compounds comprising at least one compound according to claims 1 to 7.

10. Method of preparing a liquid crystalline medium according to claim 9 by joining at least one compound of formula I according to claim 1 with other liquid crystalline compounds and mixing them while optionally adding further additives.

11. Electro-optical liquid-crystal display containing a medium comprising at least one compound according to claim 1.

## Patentansprüche

1. Verbindungen der Formel I 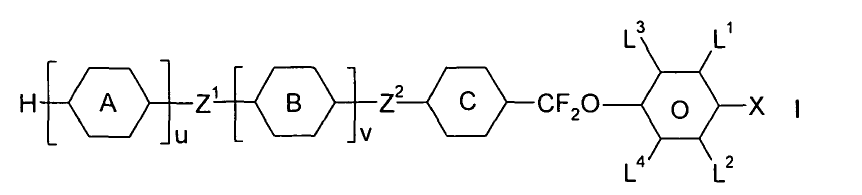 in der 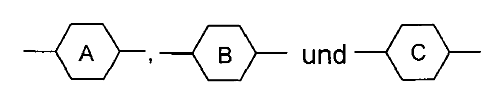 jeweils unabhängig voneinander 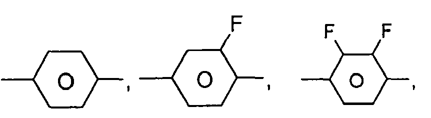 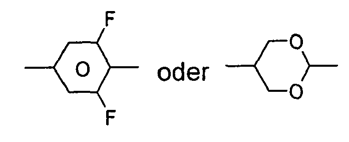 bedeuten,
L¹⁻⁴ jeweils unabhängig voneinander H oder F bedeuten,
Z¹ und Z² jeweils unabhängig voneinander -CO-O-, -O-CO-, -C₂F₄-, -C₂H₄-, -CH=CH-, -CF=CF-, -CH=CF-, -CF=CH-, -CH₂O-, -OCH₂-, -C≡C- oder eine Einfachbindung bedeuten,
X F, Cl, CN, OCN, NCS, SCN, SF₅, einen unsubstituierten Alkyl- oder Alkoxyrest, einen halogenierten Alkylrest, einen halogenierten Akenylrest, einen halogenierten Alkoxyrest oder einen halogenierten Alkenyloxyrest mit bis zu 6 Kohlenstoffatomen bedeutet, und
u für 0, 1, 2 oder 3 steht, und
v für 1 oder 2 steht, wobei u + v ≤ 3.

2. Verbindungen nach Anspruch 1, bei denen mindestens eines von Z¹ und Z² eine Einfachbindung bedeutet.

3. Verbindungen nach Anspruch 1 oder 2 der Formeln I1, I2 und I2-a bis I2-d 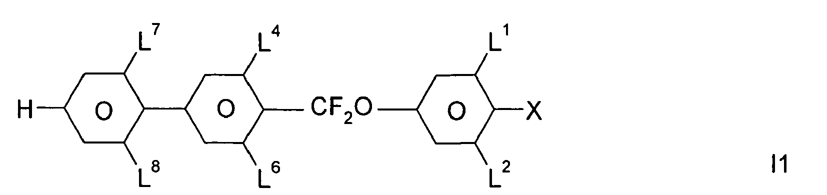 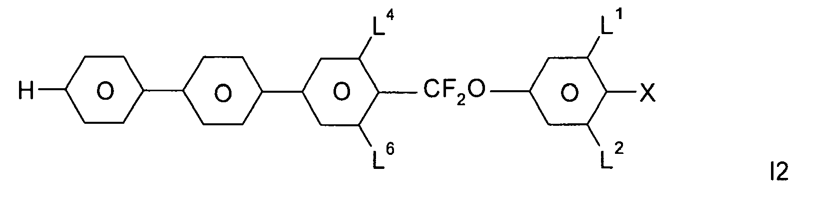 worin L¹⁻⁸ H oder F bedeutet,

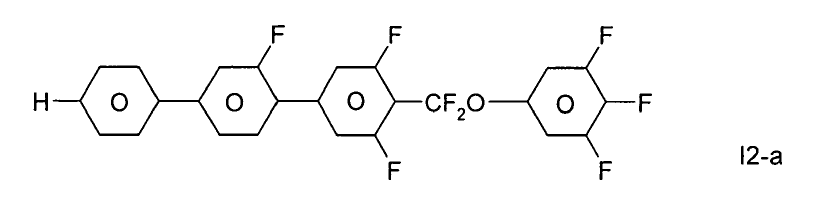

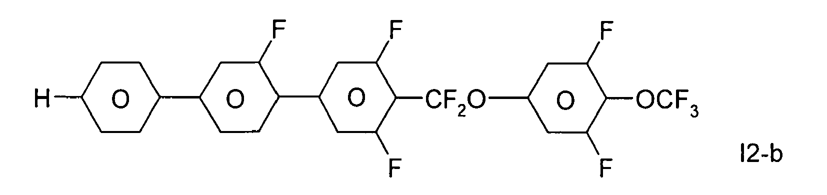

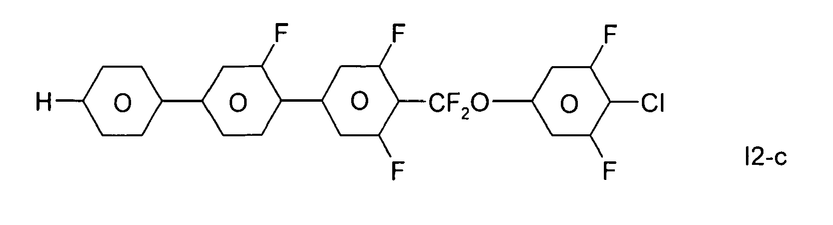

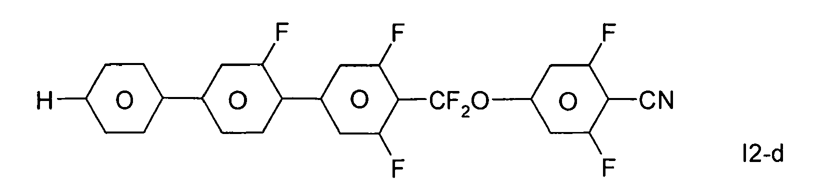

4. Verbindungen nach mindestens einem der Ansprüche 1 bis 3, bei denen X F, Cl, CN, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, CH=CF₂, OCH₃, OC₂H₅ oder OC₃H₇ bedeutet.

5. Verbindungen nach mindestens einem der Ansprüche 1 bis 4, bei denen L¹ = L² = F und L³ = L⁴ = H.

6. Verbindungen nach mindestens einem der Ansprüche 1 bis 4, bei denen
der Ring C 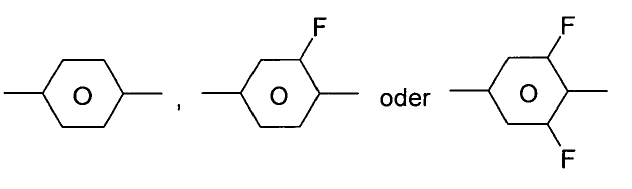 bedeutet.

7. Verbindungen nach mindestens einem der Ansprüche 1 bis 4, bei denen Z¹ und Z² beide Einfachbindungen bedeuten.

8. Verwendung der Verbindungen nach mindestens einem der Ansprüche 1 bis 7 für elektrooptische Zwecke.

9. Flüssigkristallines Medium bestehend aus mindestens zwei Verbindungen enthaltend mindestens eine Verbindung nach den Ansprüchen 1 bis 7.

10. Verfahren zur Herstellung eines flüssigkristallinen Mediums nach Anspruch 9, indem man mindestens eine Verbindung der Formel I nach Anspruch 1 mit anderen flüssigkristallinen Verbindungen zusammenbringt und miteinander mischt und dabei gegebenenfalls weitere Zusatzstoffe zugibt.

11. Elektrooptische Flüssigkristallanzeige, die ein Medium enthaltend mindestens eine Verbindung nach Anspruch 1 enthält.

## Revendications

1. Composés de la formule I, 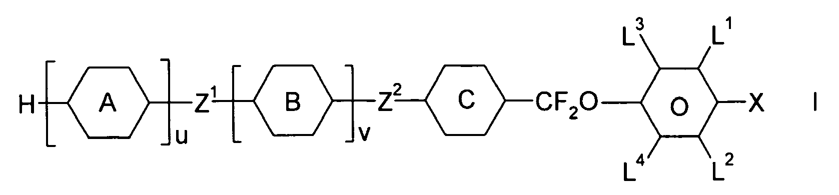 dans laquelle 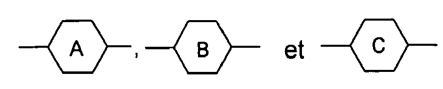 sont, chacun indépendamment des autres 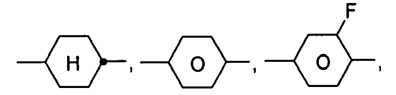 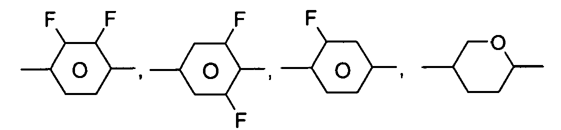 ou 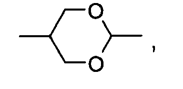
L¹⁻⁴ sont, chacun indépendamment des autres, H ou F,
Z¹ et Z² sont, chacun indépendamment de l'autre, -CO-O-, -O-CO-, -C₂F₄-, -C₂H₄-, -CH=CH-, -CF=CF-, -CH=CF-, -CF=CH-, -CH₂O-, -OCH₂-, -C≡C-, ou une liaison simple,
X est F, Cl, CN, OCN, NCS, SCN, SF₅, un radical alkyle ou alcoxy non substitué, un radical alkyle halogéné, un radical alkényle halogéné, un radical alcoxy halogéné ou un radical alkényloxy halogéné comportant jusqu'à 6 atomes de carbone, et
u 0, 1, 2 ou 3, et
v est 1 ou 2, tandis que u + v ≤ 3.

2. Composés selon la revendication 1, dans lesquels au moins l'un de Z¹ et Z² est/sont des liaisons simples.

3. Composés des formules I1, I2 et I2-a à I2-d 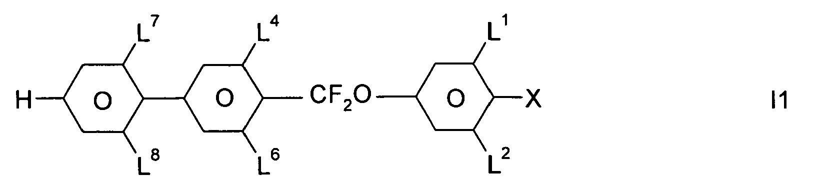 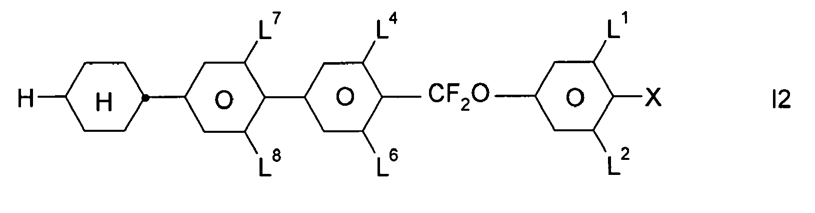 dans lesquelles L1-8 est H ou F,

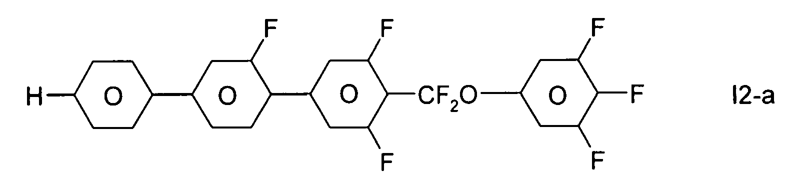

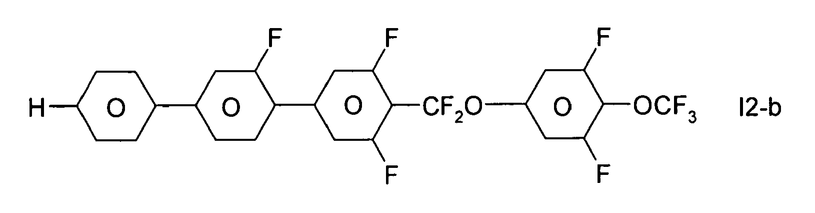

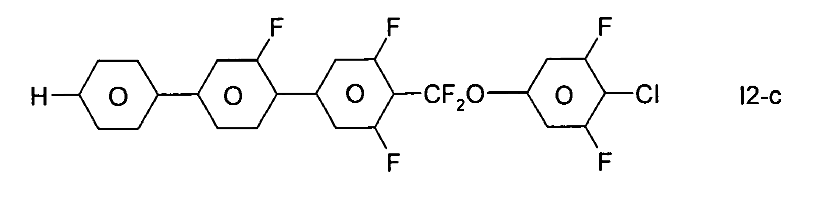

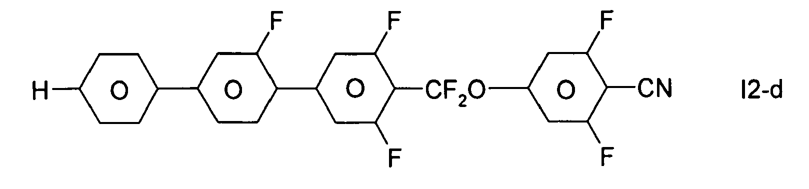

4. Composés selon au moins l'une des revendications 1 à 3, dans lesquels X est F, Cl, CN, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, CH=CF₂, OCH₃, OC₂H₅ ou OC₃H₇

5. Composés selon au moins l'une des revendications 1 à 4, dans lesquels L¹ = L² = F et L³ = L⁴ = H.

6. Composés selon au moins l'une des revendications 1 à 4, dans lesquels
cycle C est

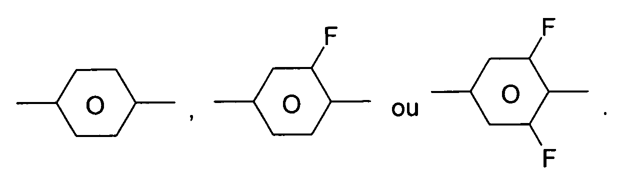

7. Composés selon au moins l'une des revendications 1 à 4, dans lesquels Z¹ et Z² sont tous deux des liaisons simples.

8. Utilisation de composés selon au moins l'une des revendications 1 à 7 à des fins électro-optiques.

9. Milieu cristallin liquide constitué par au moins deux composés comprenant au moins un composé selon les revendications 1 à 7.

10. Procédé de préparation d'un milieu cristallin liquide selon la revendication 9 en joignant au moins un composé de formule I selon la revendication 1 à d'autres composés cristallins liquides et en les mélangeant tout en ajoutant, en option, d'autres additifs.

11. Affichage à cristaux liquides électro-optique contenant un milieu comprenant au moins un composé selon la revendication 1.
